# EUROPEAN PATENT SPECIFICATION

(11) **EP 2 307 482 B1**
(45) Date of publication and mention of the grant of the patent: **25.01.2017**
(21) Application number: 09791004.6
(22) Date of filing: 30.07.2009
(51) Int. Cl.: C08G 69/26, C08G 69/36, C08K 5/053

(54) **LONG-TERM HEAT AGING RESISTANT POLYAMIDE COMPOSITIONS**
GEGENÜBER LANGZEITWÄRMEALTERUNG BESTÄNDIGE POLYAMIDZUSAMMENSETZUNGEN
COMPOSITIONS DE POLYAMIDE RÉSISTANT AU VIEILLISSEMENT THERMIQUE À LONG TERME

(30) Priority: 30.07.2008 US 137345 P
(43) Date of publication of application: 13.04.2011
(73) Proprietor: E. I. du Pont de Nemours and Company, Wilmington, DE 19898 (US)
(72) Inventor: PALMER, Robert, J., F-74520 Jonzier-Epagny (FR); MARTENS, Marvin, Michael, Bettendorf, IOWA 52722 (US)
(74) Representative: Dannenberger, Oliver Andre
(86) International application number: PCT/US2009/052253
(87) International publication number: WO 2010/014810

(56) References cited:
- EP-A- 1 041 109
- US-A1- 2002 151 625

## Description

### Field of Invention

The present invention relates to the field of polyamides compositions having improved long-term high temperature aging characteristics.

### BACKGROUND OF INVENTION

High temperature resins based on polyamides possess desirable chemical resistance, processability and heat resistance. This makes them particularly well suited for demanding high performance automotive and electrical/electronics applications. There is a current and general desire in the automotive field to have high temperature resistant structures since temperatures higher than 150°C, even higher than 200°C, are often reached in underhood areas of automobiles. When plastic parts are exposed to such high temperatures for a prolonged period, such as in automotive under-the-hood applications or in electrical/electronics applications, the mechanical properties generally tend to decrease due to the thermo-oxidation of the polymer. This phenomenon is called heat aging.

In an attempt to improve heat aging characteristics, it has been the conventional practice to add heat stabilizers (also referred as antioxidants) to thermoplastic compositions comprising polyamide resins. Examples of such heat stabilizers include hindered phenol antioxidants, amine antioxidants and phosphorus-based antioxidants. For polyamide compositions, three types of heat stabilizers are conventionally used to retain the mechanical properties of the composition upon exposure to high temperatures. One is the use of phenolic antioxidants optionally combined with a phosphorus based synergist as previously mentioned, the use of aromatic amines optionally combined with a phosphorus based synergist and the third one is the use of copper salts and derivatives. Phenolic antioxidants are known to improve the mechanical/physical properties of the thermoplastic composition up to an aging temperature of 120°C.

US patent 5,965,652 discloses a thermally stable polyamide molding composition containing colloidal copper formed in situ. However, the disclosed compositions exhibit retention of impact strength only for a heat aging at 140°C.

GB patent 839,067 discloses a polyamide composition comprising a copper salt and a halide of a strong organic base. However, the disclosed compositions exhibit improved bending heat stability performance only for a heat aging at 170°C.

Existing technologies lead not only to a poor improvement of long-term heat aging resistance, but also the improved heat aging characteristics are insufficient for more demanding applications involving exposure to higher temperatures such as for example in automotive under-the-hood applications and in electrical/electronics applications.

US 2006/0155034 and US 2008/0146718 patent publications disclose polyamide compositions comprising a metal powder as thermal stabilizer with a fibrous reinforcing agent. Disclosed compositions exhibit improved mechanical properties such as tensile strength and elongation at break upon long-term heat aging at 215°C. However, such metal powders are not only expensive but they are also highly unstable because they are prone to spontaneous combustion.

EP 1041109 discloses a polyamide composition comprising a polyamide resin, a polyhydric alcohol having a melting point of 150 to 280°C, that has good fluidity and mechanical strength and is useful in injection welding techniques. US 2002/151625 A1 discloses a reinforced polyamide resin composition comprising a half-aromatic polyamide resin and a polyalkylene polyhydric alcohol.

Unfortunately, with the existing technologies, molded articles based on polyamide compositions either suffer from an unacceptable deterioration of their mechanical properties upon long-term high temperature exposure or they are very expensive due to the use of high-cost heat stabilizers.

There remains a need for low-cost polyamide compositions that are suitable for manufacturing articles and that exhibit good mechanical properties after long-term high temperature exposure.

### SUMMARY OF INVENTION

### Disclosed is a thermoplastic composition comprising

A) a polyamide resin comprising on or more polyamides selected from the group consisting of Group (III) Polyamides comprising
   (a) 20 to 35 mole percent semiaromatic repeat units derived from monomers selected from one or more of the group consisting of:
      (i) aromatic dicarboxylic acids having 8 to 20 carbon atoms and aliphatic diamines having 4 to 20 carbon atoms; and
   (b) 65 to 80 mole percent aliphatic repeat units derived from monomers selected from one or more of the group consisting of:
      (ii) an aliphatic dicarboxylic acid having 6 to 20 carbon atoms and said aliphatic diamine having 4 to 20 carbon atoms;
      (iii) a lactam and/or aminocarboxylic acid having 4 to 20 carbon atoms;
B) 0.25 to 15 weight percent of one or more polyhydric alcohols having more than two hydroxyl groups and having a number average molecular weight (Mn) of less than 2000 as determined with gel chromatography, the weight percentage being based on the total weight of said thermoplastic composition; and
C) 0 to 60 weight percent of one or more reinforcement agents wherein said polyamide resin has at least 60 meq/Kg of amine ends.

### DETAILED DESCRIPTION

For the purposes of the description, unless otherwise specified, "high-temperature" means a temperature at or higher than 170 °C, preferably at or higher than 210 °C, and most preferably at or higher than 230 °C.

In the present invention, unless otherwise specified, "long-term" refers to an aging period equal or longer than 500 hrs, preferably equal or longer than 1000 hrs.

As used herein, the term "high heat stability", as applied to the polyamide composition disclosed herein or to an article made from the composition, refers to the retention of physical properties (for instance, tensile strength) of 4 mm thick molded test bars consisting of the polyamide composition that are exposed to air oven aging (AOA) conditions at a test temperature at 170 °C for a test period of at least 500 h, in an atmosphere of air, and then tested according to ISO 527-2/1A method. The physical properties of the test bars are compared to that of unexposed controls that have identical composition and shape, and are expressed in terms of "% retention". In another preferred embodiment the test temperature is at 210 °C, the test period is at 500 hours and the exposed test bars have a % retention of tensile strength of at least 70 %. Herein "high heat stability" means that said molded test bars, on average, meet or exceed a retention for tensile strength of 50 % when exposed at a test temperature at 170 °C for a test period of at least 500 h. Compositions exhibiting a higher retention of physical properties for a given exposure temperature and time period have better heat stability.

The terms "at 170 °C" and "at 210 °C" refer to the nominal temperature of the environment to which the test bars are exposed; with the understanding that the actual temperature may vary by +/- 2 °C from the nominal test temperature.

The term "(meth)acrylate" is meant to include acrylate esters and methacrylate esters.

The term "blending polyamides" are a group of polyamides that are suitable for blending with the Group (IV) to Group (VI) Polyamides, as disclosed hereafter, to form a polyamide blend.

Herein melting points and glass transitions are as determined with differential scanning calorimetry (DSC) at a scan rate of 10 °C/min in the first heating scan, wherein the melting point is taken at the maximum of the endothermic peak and the glass transition, if evident, is considered the midpoint of the change in enthalpy.

The thermoplastic composition used in the present invention comprises a copolyamide.

Polyamides are condensation products of one or more dicarboxylic acids and one or more diamines, and/or one or more aminocarboxylic acids, and/or ring-opening polymerization products of one or more cyclic lactams. Suitable cyclic lactams are caprolactam and laurolactam. Polyamides may be fully aliphatic or semi-aromatic.

Fully aliphatic polyamides used in the resin composition of the present invention are formed from aliphatic and alicyclic monomers such as diamines, dicarboxylic acids, lactams, aminocarboxylic acids, and their reactive equivalents. A suitable aminocarboxylic acid is 11-aminododecanoic acid. Suitable lactams are caprolactam and laurolactam. In the context of this invention, the term "fully aliphatic polyamide" also refers to copolymers derived from two or more such monomers and blends of two or more fully aliphatic polyamides. Linear, branched, and cyclic monomers may be used.

Carboxylic acid monomers comprised in the fully aliphatic polyamides include, but are not limited to aliphatic carboxylic acids, such as for example adipic acid (C6), pimelic acid (C7), suberic acid (C8), azelaic acid (C9), decanedioic acid (C10), dodecanedioic acid (C12), tridecanedioic acid (C13), tetradecanedioic acid (C14), and pentadecanedioic acid (C15). Diamines can be chosen among diamines having four or more carbon atoms, including, but not limited to tetramethylene diamine, hexamethylene diamine, octamethylene diamine, decamethylene diamine, dodecamethylene diamine, 2-methylpentamethylene diamine, 2-ethyltetramethylene diamine, 2-methyloctamethylenediamine; trimethylhexamethylenediamine, meta-xylylene diamine, and/or mixtures thereof.

The semi-aromatic polyamide is a homopolymer, a copolymer, a terpolymer or more advanced polymers formed from monomers containing aromatic groups. One or more aromatic carboxylic acids may be terephthalate or a mixture of terephthalate with one or more other carboxylic acids, such as isophthalic acid, phthalic acid, 2-methyl terephthalic acid and naphthalic acid. In addition, the one or more aromatic carboxylic acids may be mixed with one or more aliphatic dicarboxylic acids, as disclosed above.

Preferred polyamides disclosed herein are homopolymers or copolymers wherein the term copolymer refers to polyamides that have two or more amide and/or diamide molecular repeat units. The homopolymers and copolymers are identified by their respective repeat units. For copolymers disclosed herein, the repeat units are listed in decreasing order of mole % repeat units present in the copolymer. The following list exemplifies the abbreviations used to identify monomers and repeat units in the homopolymer and copolymer polyamides (PA):
- HMD: hexamethylene diamine (or 6 when used in combination with a diacid)
- T: Terephthalic acid
- AA: Adipic acid
- DMD: Decamethylenediamine
- 6: €-Caprolactam
- DDA: Decanedioic acid
- DDDA: Dodecanedioic acid
- I: Isophthalic acid
- MXD: meta-xylylene diamine
- TMD: 1,4-tetramethylene diamine
- 4T: polymer repeat unit formed from TMD and T
- 6T: polymer repeat unit formed from HMD and T
- DT: polymer repeat unit formed from 2-MPMD and T
- MXD6: polymer repeat unit formed from MXD and AA
- 66: polymer repeat unit formed from HMD and AA
- 10T: polymer repeat unit formed from DMD and T
- 410: polymer repeat unit formed from TMD and DDA
- 510: polymer repeat unit formed from 1,5-pentanediamine and DDA
- 610: polymer repeat unit formed from HMD and DDA
- 612: polymer repeat unit formed from HMD and DDDA
- 6: polymer repeat unit formed from €-caprolactam
- 11: polymer repeat unit formed from 11-aminoundecanoic acid
- 12: polymer repeat unit formed from 12-aminododecanoic acid

Note that in the art the term "6" when used alone designates a polymer repeat unit formed from €-caprolactam. Alternatively "6" when used in combination with a diacid such as T, for instance 6T, the "6" refers to HMD. In repeat units comprising a diamine and diacid, the diamine is designated first. Furthermore, when "6" is used in combination with a diamine, for instance 66, the first "6" refers to the diamine HMD, and the second "6" refers to adipic acid. Likewise, repeat units derived from other amino acids or lactams are designated as single numbers designating the number of carbon atoms.

Polyamides useful as blending polyamides in various embodiments include Group (I) Polyamides having a melting point of less than 210 °C, and comprising an aliphatic or semiaromatic polyamide selected from the group poly(pentamethylene decanediamide) (PA510), poly(pentamethylene dodecanediamide) (PA512), poly(ε-caprolactam/hexamethylene hexanediamide) (PA6/66), poly(ε-caprolactam/hexamethylene decanediamide) (PA6/610), poly(ε-caprolactam/hexamethylene dodecanediamide) (PA6/612), poly(hexamethylene tridecanediamide) (PA613), poly(hexamethylene pentadecanediamide) (PA615), poly(ε-caprolactam/tetramethylene terephthalamide) (PA6/4T), poly(ε-caprolactam/hexamethylene terephthalamide) (PA6/6T), poly(ε-caprolactam/decamethylene terephthalamide) (PA6/10T), poly(ε-caprolactam/dodecamethylene terephthalamide) (PA6/12T), poly(hexamethylene decanediamide/hexamethylene terephthalamide) (PA610/6T), poly(hexamethylene dodecanediamide/hexamethylene terephthalamide) (PA612/6T), poly(hexamethylene tetradecanediamide/hexamethylene terephthalamide) (PA614/6T), poly(ε-caprolactam/ hexamethylene isophthalamide/hexamethylene terephthalamide) (PA6/61/6T), poly(ε-caprolactam/hexamethylene hexanediamide/hexamethylene decanediamide) (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/hexamethylene terephthamide) (PA D6/66/ /6T), poly(2-methylpentamethylene hexanediamide/hexamethylene hexanediamide/) (PA D6/66), poly(decamethylene decanediamide) (PA1010), poly(decamethylene dodecanediamide) (PA1012), poly(decamethylene decanediamide/decamethylene terephthalamide) (PA1010/10T) poly(decamethylene decanediamide/dodecamethylene decanediamide/ decamethylene terephthalamide/dodecamethylene terephthalamide (PA1010/1210/10T/12T), poly(11-aminoundecanamide) (PA11), poly(11-aminoundecanamide/tetramethylene terephthalamide) (PA11/4T), poly(11-aminoundecanamide/hexamethylene terephthalamide) (PA11/ 6T), poly(11-aminoundecanamide/decamethylene terephthalamide) (PA11/10T), poly(11-aminoundecanamide/dodecamethylene terephthalamide) (PA11/12T), poly(12-aminododecanamide) (PA12), poly(12-aminododecanamide/tetramethylene terephthalamide) (PA12/4T), poly(12-aminododecanamide/hexamethylene terephthalamide) (PA12/6T), poly(12-aminododecanamide/decamethylene terephthalamide) (PA12/10T) poly(dodecamethylene dodecanediamide) (PA1212), and poly(dodecamethylene dodecanediamide/dodecamethylene dodecanediamide/dodecamethylene terephthalamide)) (PA1212/12T).

Group (I) Polyamides may have semiaromatic repeat units to the extent that the melting point is less than 210 °C and generally the semiaromatic polyamides of the group have less than 40 mol percent semiaromatic repeat units. Semiaromatic repeat units are defined as those derived from monomers selected from one or more of the group consisting of: aromatic dicarboxylic acids having 8 to 20 carbon atoms and aliphatic diamines having 4 to 20 carbon atoms.

Other polyamides useful as blending polyamide compositions in various embodiments include Group (II) Polyamides having a melting point of at least 210 °C, and comprising an aliphatic polyamide selected from the group consisting of poly(tetramethylene hexanediamide) (PA46), poly(ε-caprolactam) (PA 6), poly(hexamethylene hexanediamide/(ε-caprolactam/) (PA 66/6) poly(hexamethylene hexanediamide) (PA 66), poly(hexamethylene hexanediamide/hexamethylene decanediamide) (PA66/610), poly(hexamethylene hexanediamide/hexamethylene dodecanediamide) (PA66/612), poly(hexamethylene hexanediamide/decamethylene decanediamide) (PA66/1010), poly(hexamethylene decanediamide) (PA610), poly(hexamethylene dodecanediamide) (PA612), poly(hexamethylene tetradecanediamide) (PA614), poly(hexamethylene hexadecanediamide) (PA616), and poly(tetramethylene hexanediamide/2-methylpentamethylene hexanediamide) (PA46/D6)

The polyamides useful in the invention are Group (III) Polyamides comprising
(a) 20 to 35 mole percent semiaromatic repeat units derived from monomers selected from one or more of the group consisting of:
   i) aromatic dicarboxylic acids having 8 to 20 carbon atoms and aliphatic diamines having 4 to 20 carbon atoms; and
(b) 65 to 80 mole percent aliphatic repeat units derived from monomers selected from one or more of the group consisting of:
   ii) an aliphatic dicarboxylic acid having 6 to 20 carbon atoms and said aliphatic diamine having 4 to 20 carbon atoms; and
   iii) a lactam and/or aminocarboxylic acid having 4 to 20 carbon atoms.

Within the Group (III) Polyamides, the polyamides have at least 60 meq/Kg of amine ends, and preferably at least 70 meq/Kg amine ends. Amine ends may be determined by titrating a 2 percent solution of polyamide in a phenol/methanol/water mixture (50:25:25 by volume) with 0.1 N hydrochloric acid. The end point may be determined potentiometrically or conductometrically (See Kohan, M.I. Ed. Nylon Plastics Handbook, Hanser: Munich, 1995; p. 79 and Waltz, J.E. and Taylor, G.B., Anal. Chem. 1947 19, 448-50).

Other preferred polyamides of Group (III) Polyamides have a melting point of at lest 210 °C, and preferably at least 260 °C, as determined with differential scanning calorimetry at 10 °C/min.

Other preferred polyamides of Group (III) Polyamides are wherein said semiaromatic repeat unit is derived from terephthalic acid; more preferably, additionally wherein said aliphatic repeat unit is derived from adipic acid, and more preferably, additionally wherein said aliphatic diamine is 1, 4-butane diamine or 1,6-hexanediamine.

In one embodiment the polyamide resin comprises a Group (III) Polyamide having a melting point of at least 210 °C, and is selected from the group consisting of poly(tetramethylene hexanediamide/tetramethylene terephthalamide) (PA46/4T), poly(tetramethylene hexanediamide/hexamethylene terephthalamide) (PA46/6T), poly(tetramethylene hexanediamide/2-methylpentamethylene hexanediamide/decamethylene terephthalamide) PA46/D6/10T), poly(hexamethylene hexanediamide/hexamethylene terephthalamide) (PA 66/6T), poly(hexamethylene hexanediamide/hexamethylene isophthalamide/hexamethylene terephthalamide PA66/6I/6T, and poly(hexamethylene hexanediamide/2-methylpentamethylene hexanediamide /hexamethylene terephthalamide (PA66/D6/6T). A most preferred polyamide is PA 66/6T.

The polyamides of the present invention may be prepared by any means known to those skilled in the art, such as in a batch process using, for example, an autoclave or using a continuous process. See, for example, Kohan, M.I. Ed. Nylon Plastics Handbook, Hanser: Munich, 1995; pp. 13-32. Additives such as lubricants, antifoaming agents, and end-capping agents may be added to the polymerization mixture. The concentration of amine ends can be controlled in the preparation of the polyamide by adjusting the pH to control reaction stoichiometry; and controlling the amount of diamine lost in the polymerization process; as a result of removal of water from the polymerization reactor. Amine ends may also be adjusted by addition of endcapping agents as is well known in the art. A common endcapping agent is acetic acid.

The thermoplastic composition may additionally comprise
(D) 0.1 to 30 weight percent, and preferably 0.1 to 10 weight percent, of one or more blending polyamides selected from the group consisting of Group (I) Polyamides having a melting point of less than 210 °C, as disclosed above and Group (II) Polyamide having a melting point of at least 210 °C, as disclosed above.

In another embodiment the blending polyamide is selected from Group (I) Polyamides. In another embodiment the blending polyamide is selected from Group (II) Polyamides. In another embodiment preferred blending polyamides are selected from poly(ε-caprolactam) (PA 6) and poly(hexamethylene hexanediamide) (PA 66). The blending polyamides, when present in relatively small weight fractions, in the thermoplastic composition provides unexpected and surprising improvements in long-term heat stability, as compared to similar compositions wherein the blending polyamide is not present.

The thermoplastic composition comprises 0.25 to 15 weight percent of one or more polyhydric alcohols having more than two hydroxyl groups and a having a number average molecular weight (Mₙ) of less than 2000 as determined with gel permeation chromatography (GPC).

Polyhydric alcohols may be selected from aliphatic hydroxylic compounds containing more than two hydroxyl groups, aliphatic-cycloaliphatic compounds containing more than two hydroxyl groups, cycloaliphatic compounds containing more than two hydroxyl groups, aromatic and saccharides.

An aliphatic chain in the polyhydric alcohol can include not only carbon atoms but also one or more hetero atoms which may be selected, for example, from nitrogen, oxygen and sulphur atoms. A cycloaliphatic ring present in the polyhydric alcohol can be monocyclic or part of a bicyclic or polycyclic ring system and may be carbocyclic or heterocyclic. A heterocyclic ring present in the polyhydric alcohol can be monocyclic or part of a bicyclic or polycyclic ring system and may include one or more hetero atoms which may be selected, for example, from nitrogen, oxygen and sulphur atoms. The one or more polyhydric alcohols may contain one or more substituents, such as ether, carboxylic acid, carboxylic acid amide or carboxylic acid ester groups.

Examples of polyhydric alcohol containing more than two hydroxyl groups include, without limitation, triols, such as glycerol, trimethylolpropane, 2,3-di-(2'-hydroxyethyl)-cyclohexan-1-ol, hexane-1,2,6-triol, 1,1,1-tris-(hydroxymethyl)ethane, 3-(2'-hydroxyethoxy)-propane-1,2-diol, 3-(2'-hydroxypropoxy)-propane-1,2-diol, 2-(2'-hydroxyethoxy)-hexane-1,2-diol, 6-(2'-hydroxypropoxy)-hexane-1,2-diol, 1,1,1-tris-[(2'-hydroxyethoxy)-methyl]-ethane, 1,1,1-tris-[(2'-hydroxypropoxy)-methyl]-propane, 1,1,1-tris-(4'-hydroxyphenyl)-ethane, 1,1,1-tris-(hydroxyphenyl)-propane, 1,1,3-tris-(dihydroxy-3-methylphenyl)-propane, 1,1,4-tris-(dihydroxyphenyl)-butane, 1,1,5-tris-(hydroxyphenyl)-3-methylpentane, di-trimethylopropane, trimethylolpropane ethoxylates, or trimethylolpropane propoxylates; polyols such as pentaerythritol, dipentaerythritol, and tripentaerythritol; and saccharides, such as cyclodextrin, D-mannose, glucose, galactose, sucrose, fructose, xylose, arabinose, D-mannitol, D-sorbitol, D-or L-arabitol, xylitol, iditol, talitol, allitol, altritol, guilitol, erythritol, threitol, and D-gulonic-y-lactone; and the like.

Preferred polyhydric alcohols include those having a pair of hydroxyl groups which are attached to respective carbon atoms which are separated one from another by at least one atom. Especially preferred polyhydric alcohols are those in which a pair of hydroxyl groups is attached to respective carbon atoms which are separated one from another by a single carbon atom.

Preferably, the polyhydric alcohol used in the thermoplastic composition is pentaerythritol, dipentaerythritol, tripentaerythritol, ditrimethylolpropane, D-mannitol, D-sorbitol and xylitol. More preferably, the polyhydric alcohol used is dipentaerythritol and/or tripentaerythritol. A most preferred polyhydric alcohol is dipentaerythritol.

In various embodiments the content of said polyhydric alcohol in the thermoplastic composition is 0.25-15 weight percent, preferably 0.5-8 weight percent, more preferably 1-5 weight percent, most preferably 2-5 weight percent, based on the total weight of said thermoplastic composition.

The thermoplastic composition includes 0 to 60 weight percent of one or more reinforcement agents. In one embodiment the thermoplastic composition includes 10 to 60 weight percent of one or more reinforcement agents.

In another embodiment the composition includes less than 10 weight percent of one or more reinforcement agents, preferably less than 1 weight percent, and most preferably 0 weight percent.

The reinforcement agent may be any filler, but is preferably selected from the group consisting calcium carbonate, glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof.

Glass fibers with noncircular cross-section refer to glass fiber having a cross section having a major axis lying perpendicular to a longitudinal direction of the glass fiber and corresponding to the longest linear distance in the cross section. The non-circular cross section has a minor axis corresponding to the longest linear distance in the cross section in a direction perpendicular to the major axis. The non-circular cross section of the fiber may have a variety of shapes including a cocoon-type (figure-eight) shape, a rectangular shape; an elliptical shape; a roughly triangular shape; a polygonal shape; and an oblong shape. As will be understood by those skilled in the art, the cross section may have other shapes. The ratio of the length of the major axis to that of the minor access is preferably between 1.5:1 and 6:1. The ratio is more preferably between 2:1 and 5:1 and yet more preferably between 3:1 to 4:1. Suitable glass fiber are disclosed in EP 0 190 001 and EP 0 196 194.

The molded or extruded thermoplastic article, optionally, comprises 0 to 50 weight percent of a polymeric toughener comprising a reactive functional group and/or a metal salt of a carboxylic acid. In one embodiment the molded or extruded thermoplastic article comprises 2 to 20 weight percent polymeric toughener selected from the group consisting of: a copolymer of ethylene, glycidyl (meth)acrylate, and optionally one or more (meth)acrylate esters; an ethylene/α-olefin or ethylene/α-olefin/diene copolymer grafted with an unsaturated carboxylic anhydride; a copolymer of ethylene, 2-isocyanatoethyl (meth)acrylate, and optionally one or more (meth)acrylate esters; and a copolymer of ethylene and acrylic acid reacted with a Zn, Li, Mg or Mn compound to form the corresponding ionomer.

The thermoplastic composition may also comprise other additives commonly used in the art, such other heat stabilizers or antioxidants referred to as "co-stabilizers", antistatic agents, blowing agents, lubricants, plasticizers, and colorant and pigments.

Co-stabilizers including copper stabilizers, secondary aryl amines, hindered amine light stabilizers (HALS), hindered phenols, and mixtures thereof, may be used in the compositions of the invention. Preferred co-stabilizers are selected from the group consisting of secondary aryl amines, hindered amine light stabilizers (HALS), hindered phenols, and mixtures thereof.

A significant advantage of the thermoplastic compositions is that high thermal stability is provided without the use of conventional copper heat stabilizers. Copper heat stabilizers tend to act as corrosive agents over long periods of time at elevated temperatures; and in some environments actually cause degradation of semiaromatic polymers. Thus, another embodiment is a thermoplastic composition, as disclosed above, having less than 25 ppm copper as determined with atomic absorption spectroscopy.

Herein the thermoplastic composition is a mixture by melt-blending, in which all polymeric ingredients are adequately mixed, and all non-polymeric ingredients are adequately dispersed in a polymer matrix. Any melt-blending method may be used for mixing polymeric ingredients and non-polymeric ingredients of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing filler presents a long physical shape (for example, a long glass fiber), drawing extrusion molding may be used to prepare a reinforced composition.

The thermoplastic composition having a polyhydric alcohol having two or more hydroxyl groups, as disclosed above, is useful in increasing long-term thermal stability at high temperatures of molded or extruded articles made therefrom. The long-term thermal stability of the articles can be assessed by air oven ageing of 4 mm thick test samples at various test temperatures for various test periods of time. The oven test temperatures for the composition disclosed herein are a minimum of 210 °C and a minimum of 500 hours test periods. The test temperatures and the test periods may be higher. The test samples, after air oven ageing, are tested for tensile strength and elongation to break, according to ISO 527-2/1A test method; and compared with non-aged controls that are dry as molded (DAM). The comparison with the DAM controls provides the retention of tensile strength and/or retention of elongation to break, and thus the various compositions can be assessed as to long-term high temperature ageing performance.

In various embodiments of the invention the thermoplastic composition have an AOA 210 °C/ 1000 hours retention of tensile strength of at least 70 % and preferably at least 80, and 85 %, based upon comparison with DAM non-aged controls.

In another aspect, the present invention relates a use of the above disclosed thermoplastic compositions for high temperature applications.

In another aspect, the present invention relates to a method for manufacturing an article by shaping the thermoplastic composition of the invention. Examples of articles are films or laminates, automotive parts or engine parts or electrical/electronics parts. By "shaping", it is meant any shaping technique, such as for example extrusion, injection moulding, thermoform moulding, compression moulding or blow moulding. Preferably, the article is shaped by injection moulding or blow moulding. The molded or extruded thermoplastic articles disclosed herein may have application in many vehicular components that meet one or more of the following requirements: high impact requirements; significant weight reduction (over conventional metals, for instance); resistance to high temperature; resistance to oil environment; resistance to chemical agents such as coolants; and noise reduction allowing more compact and integrated design. Specific molded or extruded thermoplastic articles are selected from the group consisting of charge air coolers (CAC); cylinder head covers (CHC); oil pans; engine cooling systems, including thermostat and heater housings and coolant pumps; exhaust systems including mufflers and housings for catalytic converters; air intake manifolds (AIM); and timing chain belt front covers. As an illustrative example of desired mechanical resistance against long-term high temperature exposure, a charge air cooler can be mentioned. A charge air cooler is a part of the radiator of a vehicle that improves engine combustion efficiency. Charge air coolers reduce the charge air temperature and increase the density of the air after compression in the turbocharger thus allowing more air to enter into the cylinders to improve engine efficiency. Since the temperature of the incoming air can be more than 200°C when it enters the charge air cooler, it is required that this part be made out of a composition maintaining good mechanical properties under high temperatures for an extended period of time.

The present invention is further illustrated by the following examples. It should be understood that the following examples are for illustration purposes only, and are not used to limit the present invention thereto.

### Materials

In the Examples and Comparative Examples:
PA66 refers to an aliphatic polyamide made of 1,6-hexanedioic acid and 1,6-hexamethylenediamine, commercially available from E.I. DuPont de Nemours and Company, Wilmington, Delaware, USA under the trademark Zytel^{®} 101NC010.
PA6 refers to Ultramid® B27 poly(ε-caprolactam) available from BASF, USA.
DPE refers to dipentaerythritol that was from Perstorp Speciality Chemicals AB, Perstorp, Sweden as Di-Penta 93.
Glass fibers A 4.5 mm length chopped glass fibers, refers to OCV 983, available from Owens Corning Vetrotex, France.
Glass Fiber B refers to PPG 3660 chopped glass fiber available fro PPG Industries, Pittsburgh, PA.
Black Pigment A refers to 40 wt % nigrosine black pigment concentrate in a PA66 carrier.
Cu heat stabilizer refers to a mixture of 7 parts of potassium iodide and 1 part of copper iodide in 0.5 part of a stearate wax binder.
Polyamide A refers to PA66/6T (75/25 molar ratio repeat units) with amine ends approximately 50 meq/kg that was provided according to the following procedure: Polyamide 66 salt solution (3928 lbs (1782 kg). of a 51.7 percent by weight with a pH of 8.1) and 2926 lbs (1327 kg) of a 25.2% by weight of polyamide 6T salt solution with a pH of 7.6 were charged into an autoclave with 100 g of a conventional antifoam agent, 20 g of sodium hypophosphite, 220 g of sodium bicarbonate, 2476 g of 80% HMD solution in water, and 1584 g of glacial acetic. The solution was then heated while the pressure was allowed to rise to 265 psia (18.3 bar) at which point, steam was vented to maintain the pressure at 265 psia (18.3 bar) and heating was continued until the temperature of the batch reached 250°C. The pressure was then reduced slowly to 6 psia (0.41 bar), while the batch temperature was allowed to further rise to 280-290 °C. The pressure was then held at 6 psia (0.41 bar) and the temperature was held at 280-290 °C. for 20 minutes. Finally, the polymer melt was extruded into strands, cooled, and cut into pellets. The resulting polyamide 66/6T is referred to herein as Polyamide A having a melting point of 268 +/- 1 °C, relative viscosity (according to ASTM D-789 method) of 42 +/- 2; NH2 ends of 43 +/- 2 meg/kg and COOH ends of 88 +/- 5 meg/kg.
Polyamide B, referring to PA66/6T (75/25 molar ratio repeat units) with high amine ends (i.e. at least 70 meq/kg), was provided according to the following procedure:
   Polyamide 66/6T salt solution (214.25 lbs (97.18 kg). of a 39.70 percent by weight) was prepared from hexamethylenediamine, adipic acid, and
   terephthalic acid in water, where the molar ratio of 1,6-adipic acid to terephthalic acid is 75:25. The salt solution had a pH of 8.20 +- 0.05 and was charged into an autoclave with 3.5 g of a 10 percent by weight solution of a conventional antifoam agent in water, 0.7g of sodium hypophosphite, 7.7g of sodium bicarbonate, 237.5 g of 80% HMD solution in water, and 15 g of glacial acetic acid. The solution was then heated while the pressure was allowed to rise to 265 psia (18.3 bar) at which point, steam was vented to maintain the pressure at 265 psia (18.3 bar) and heating was continued until the temperature of the batch reached 255°C. The pressure was then reduced slowly to 10 psia (0.69 bar), while the batch temperature was allowed to further rise to 275-285 °C. The pressure was then held at 10 psia (0.69 bar) and the temperature was held at 275-285 °C. for 20 minutes. Finally, the polymer melt was extruded into strands, cooled, and cut into pellets. The resulting polyamide 66/6T is referred to herein as Polyamide B having a melting point of 269 +/- 1 °C; relative viscosity (according to ASTM D-789 method) of 44 +/- 2, NH2 ends of 88 +/- 2 meg/kg and COOH ends of 51 +/- 5 meg/kg.

### Methods

### Compounding method

The compositions of Examples were prepared by melt blending the ingredients listed in the Tables in a 40 mm twin screw extruder (Berstorff ZE40) operating at about 280°C using a screw speed of about 300 rpm, a throughput of 110 kg/hour and a melt temperature measured by hand of about 290°C. The glass fibers were added to the melt through a screw side feeder. Ingredient quantities shown in the Tables are given in weight percent on the basis of the total weight of the thermoplastic composition.

The compounded mixture was extruded in the form of laces or strands, cooled in a water bath, chopped into granules and placed into sealed aluminum lined bags in order to prevent moisture pick up. The cooling and cutting conditions were adjusted to ensure that the materials were kept below 0.15 wt% of moisture level.

### Physical properties measurement

Mechanical tensile properties, i.e. E-modulus, stress at break (Tensile strength) and strain at break (elongation at break) were measured according to ISO 527-2/1A. Measurements were made on injection molded ISO tensile bar (melt temperature = 295-300°C; mold temperature = 100°C and a hold pressure of 85 MPa) with a thickness of the test specimen of 4 mm and a width of 10 mm according to ISO 527/1A at a testing speed of 5 mm/min (tensile strength and elongation) and 50 mm/min for unreinforced samples. Tensile Modulus was measured at 1 mm/min.

### Air Oven Ageing (AOA)

The test specimens were heat aged in a re-circulating air ovens (Heraeus type UT6060) according to the procedure detailed in ISO 2578. At various heat aging times, the test specimens were removed from the oven, allowed to cool to room temperature and sealed into aluminum lined bags until ready for testing. The tensile mechanical properties were then measured according to ISO 527 using a Zwick tensile instrument. The average values obtained from 5 specimens are given in the Tables.

Retention of E-modulus, stress at break and strain at break corresponds to the percentage of the E-modulus, stress at break and strain at break after heat aging for 500 hours 1000 hours in comparison with that of an unexposed control of the same composition and shape considered as being 100%.

### Example 2 and Comparative Examples 1 and C-1 - C-4

Compositions of Examples 1 and 2 and C-1 - C-4 are listed in Table 7. Examples 1 and C-3 show the heat ageing performance of PA66/6T (75/25 molar ratio) having a number of amine ends of about 45 meq/Kg. Tensile properties after AOA at 210 °C at 500 h and 1000 h, and tensile properties of non-heat-aged control; and retention of physical properties; are listed in Table 1. The Examples show that the presence of DPE at 1.5 wt % level provides significant improvement in retention of tensile strength, and especially at 1000 h and 210 °C, as compared to the comparative examples having the conventional copper stabilizer. Additionally, Example 2 having amine ends of 88 +/- 2 meg/kg surprisingly shows significant improvement in retention of tensile strength, as compared to Example 1 having NH2 ends of 43 +/- 2 meg/kg. Both Examples 1 and 2 show significant improvement in retention of tensile strength, as compared with Comparative Examples C-1 and C-2 containing conventional PA66.

**Table 1**

| Example | C-1* | C-2* | C-3* | 1* | C-4* | 2 |
|---|---|---|---|---|---|---|
| PA66 | 68.85 | 67.80 | | | | |
| Polyamide A (66/6T) | | | 68.85 | 67.80 | | |
| Polyamide B (66/6T) | | | | | 68.85 | 67.80 |
| Glass Fiber B | 30.00 | 30.00 | 30.00 | 30.00 | 30.00 | 30.00 |
| Black Pigment A | 0.70 | 0.70 | 0.70 | 0.70 | 0.70 | 0.70 |
| Cu Heat stabilizer | 0.45 | | 0.45 | | 0.45 | |
| DPE | | 1.50 | | 1.50 | | 1.50 |

| Tensile properties DAM | | | | | | |
|---|---|---|---|---|---|---|
| Tensile Modulus [MPa] | 9747.0 | 9811.0 | 8791.0 | 8848.0 | 9207.7 | 8631.0 |
| Tensile Strength [Mpa] | 207.8 | 205.2 | 198.6 | 189.1 | 196.1 | 187.2 |
| Elongation @ Break [%] | 3.8 | 3.4 | 3.7 | 3.2 | 5.5 | 3.4 |

| Tensile properties 500h at 210°C | | | | | | |
|---|---|---|---|---|---|---|
| Tensile Modulus [Mpa] | 9558.0 | 9028.0 | 8353.0 | 8549.0 | 8377.0 | 8355.0 |
| Tensile Strength [Mpa] | 160.7 | 210.0 | 148.0 | 198.5 | 151.3 | 202.0 |
| Retention Tensile Strength [%] | 77.3% | 102.3% | 74.5% | 105.0% | 77.1% | 107.9% |
| Elongation @ Break [%] | 2.0 | 3.3 | 1.9 | 3.4 | 2.0 | 3.8 |

| Tensile properties 1000h at 210°C | | | | | | |
|---|---|---|---|---|---|---|
| Tensile Modulus [Mpa] | 7353 | 9700 | 9142 | 9392 | 9404 | 9310 |
| Tensile Strength [Mpa] | 62.0 | 127.0 | 86.0 | 152.0 | 101.0 | 165 |
| Retention Tensile Strength [%] | 29.8% | 61.9% | 43.3% | 80.4% | 51.5% | 88.1% |
| Elongation @ Break [%] | 1.1 | 1.8 | 1.1 | 2.1 | 1.2 | 2.4 |

| | | | | | | |
|---|---|---|---|---|---|---|
| * Comparative Examples | | | | | | |

### Example 3

This Example illustrates the unexpected and surprising results provided by a blend of Group (II) polyamide (PA6) with Group (III) polyamide (PA66/6T) having high amine ends (88 meq/Kg). Example 3, listed in Table 2, contains PA66/6T and 5 wt % PA6, and has a 98.6 % retention of tensile strength after AOA at 1000 h and 210 °C, compared with Example 2 containing PA66/6T alone, which shows 88.1 % retention of tensile strength under the same conditions. This indicates that blends of polyamides can have significantly improved properties over that of the base polyamide comprising the major fraction of the blend.

**Table 2**

| Example | 3 |
|---|---|
| Polyamide B (66/6T) | 57.81 |
| PA6 | 5.00 |
| Glass Fiber A | 35.00 |
| Black Pigment A | 0.69 |
| DPE | 1.50 |

| Tensile properties DAM | |
|---|---|
| Tensile Modulus [MPa] | 11300 |
| Tensile Strength [MPa] | 208 |
| Elongation @ Break [%] | 3.4 |

| Tensile properties 500h at 210°C | |
|---|---|
| Tensile Modulus [MPa] | 11425 |
| Tensile Strength [MPa] | 227 |
| Retention Tensile Strength (%) | 109.1 |
| Elongation @ Break [%] | 3.5 |

| Tensile properties 1000h at 210°C | |
|---|---|
| Tensile Modulus [MPa] | 11418 |
| Tensile Strength [MPa] | 205 |
| Retention Tensile Strength (%) | 98.6 |
| Elongation @ Break [%] | 2.7 |

## Claims

1. A thermoplastic composition comprising
A) a polyamide resin comprising one or more polyamides selected from the group consisting of Group (III) Polyamides comprising
(a) 20 to 35 mole percent semiaromatic repeat units derived from monomers selected from one or more of the group consisting of:
i) aromatic dicarboxylic acids having 8 to 20 carbon atoms and aliphatic diamines having 4 to 20 carbon atoms; and
(b) 65 to 80 mole percent aliphatic repeat units derived from monomers selected from one or more of the group consisting of:
ii) an aliphatic dicarboxylic acid having 6 to 20 carbon atoms and said aliphatic diamine having 4 to 20 carbon atoms;
iii) a lactam and/or aminocarboxylic acid having 4 to 20 carbon atoms;
B) 0.25 to 15 weight percent of one or more polyhydric alcohols having more than two hydroxyl groups and a having a number average molecular weight (Mn) of less than 2000 as determined with gel chromatography, the weight percentage being based on the total weight of said thermoplastic composition; and
C) 0 to 60 weight percent of one or more reinforcement agents,
wherein said polyamide resin has at least 60 meq/Kg of amine ends,
wherein the amine ends are determined by titrating a 2 percent solution of polyamide in a phenol/methanol/water mixture (50:25:25 by volume) with 0.1 N hydrochloric acid.

2. The thermoplastic composition of claim 1 wherein said polyamide resin has at least 70 meq/Kg of amine ends.

3. The thermoplastic composition of claim 1 wherein said polyamide resin comprises one or more polyamides having a melting point of at least 210 °C and selected from the group consisting of poly(tetramethylene hexanediamide/tetramethylene terephthalamide) (PA46/4T), poly(tetramethylene hexanediamide/hexamethylene terephthalamide) (PA46/6T), poly(tetramethylene hexanediamide/2-methylpentamethylene hexanediamide/decamethylene terephthalamide) PA46/D6/10T), poly(hexamethylene hexanediamide/hexamethylene terephthalamide) (PA66/6T), poly(hexamethylene hexanediamide/hexamethylene isophthalamide/hexamethylene terephthalamide PA66/6I/6T, and poly(hexamethylene hexanediamide/2-methylpentamethylene hexanediamide /hexamethylene terephthalamide (PA66/D6/6T).

4. The thermoplastic composition of claim 1 wherein polyamide resin has a melting point of at least of 260 °C as determined with differential scanning calorimetry at 10 °C/min scan rate in the first heating scan.

5. The thermoplastic composition of claim 4 wherein said semiaromatic repeat unit is derived from terephthalic acid.

6. The thermoplastic composition of claim 5 wherein said aliphatic repeat unit is derived from adipic acid.

7. The thermoplastic composition of claim 5 or 6 wherein said aliphatic diamine is 1, 4-butane diamine or 1,6-hexanediamine.

8. The thermoplastic composition of claim 1 further comprising
(D) 0.1 to 30 weight percent of one or more blending polyamide(s) independently selected from the group consisting of Group (I) Polyamides having a melting point of less than 210 °C, and comprising an aliphatic or semiaromatic polyamide selected from the group poly(pentamethylene decanediamide) (PA510), poly(pentamethylene dodecanediamide) (PA512), poly(ε-caprolactam/hexamethylene hexanediamide) (PA6/66), poly(ε-caprolactam/hexamethylene decanediamide) (PA6/610), poly(ε-caprolactam/hexamethylene dodecanediamide) (PA6/612), poly(hexamethylene tridecanediamide) (PA613), poly(hexamethylene pentadecanediamide) (PA615), poly(ε-caprolactam/tetramethylene terephthalamide) (PA6/4T), poly(ε-caprolactam/hexamethylene terephthalamide) (PA6/6T), poly(ε-caprolactam/decamethylene terephthalamide) (PA6/10T), poly(ε-caprolactam/dodecamethylene terephthalamide) (PA6/12T), poly(hexamethylene decanediamide/hexamethylene terephthalamide) (PA610/6T), poly(hexamethylene dodecanediamide/hexamethylene terephthalamide) (PA612/6T), poly(hexamethylene tetradecanediamide/hexamethylene terephthalamide) (PA614/6T), poly(ε-caprolactam/ hexamethylene isophthalamide/hexamethylene terephthalamide) (PA6/6I/6T), polo(ε-caprolactam/hexamethylene hexanediamide/hexamethylene decanediamide) (PA6/66/610), poly(ε-caprolactam/hexamethylene hexanediamide/hexamethylene dodecanediamide) (PA6/66/612), poly(ε-caprolactam/hexamethylene hexanediamide/hexamethylene decanediamide/hexamethylene dodecanediamide) (PA6/66/610/612), poly(2-methylpentamethylene hexanediamide/hexamethylene hexanediamide/hexamethylene terephthamide) (PA D6/66/ /6T), poly(2-methylpentamethylene hexanediamide/hexamethylene hexanediamide/) (PA D6/66), poly(decamethylene decanediamide) (PA1010), poly(decamethylene dodecanediamide) (PA1012), poly(decamethylene decanediamide/decamethylene terephthalamide) (PA1010/10T) poly(decamethylene decanediamide/dodecamethylene decanediamide/ decamethylene terephthalamide/dodecamethylene terephthalamide (PA1010/1210/10T/12T), polo(11-aminoundecanamide) (PA11), poly(11-aminoundecanamide/tetramethylene terephthalamide) (PA11/4T), poly(11-aminoundecanamide/hexamethylene terephthalamide) (PA11/ 6T), poly(11-aminoundecanamide/decamethylene terephthalamide) (PA11/10T), poly(11-aminoundecanamide/dodecamethylene terephthalamide) (PA11/12T), poly(12-aminododecanamide) (PA12), poly(12-aminododecanamide/tetramethylene terephthalamide) (PA12/4T), poly(12-aminododecanamide/hexamethylene terephthalamide) (PA12/6T), poly(12-aminododecanamide/decamethylene terephthalamide) (PA12/10T) poly(dodecamethylene dodecanediamide) (PA1212), and poly(dodecamethylene dodecanediamide/dodecamethylene dodecanediamide/dodecamethylene terephthalamide)) (PA1212/12T); and
Group (II) Polyamides having a melting point of at least 210 °C, and comprising an aliphatic polyamide selected from the group consisting of poly(tetramethylene hexanediamide/) (PA46), poly(ε-caprolactam) (PA 6), poly(hexamethylene hexanediamide/(ε-caprolactam/) (PA 66/6) poly(hexamethylene hexanediamide/) (PA 66), poly(hexamethylene hexanediamide/hexamethylene decanediamide) (PA66/610), poly(hexamethylene hexanediamide/hexamethylene dodecanediamide) (PA66/612), poly(hexamethylene hexanediamide/decamethylene decanediamide) (PA66/1010), poly(hexamethylene decanediamide) (PA610), poly(hexamethylene dodecanediamide) (PA612), poly(hexamethylene tetradecanediamide) (PA614), poly(hexamethylene hexadecanediamide) (PA616), and poly(tetramethylene hexanediamide/2-methylpentamethylene hexanediamide/) (PA46/D6).

9. The thermoplastic composition of claim 8 wherein the one or more blending polyamide(s) is selected from Group (I) Polyamides.

10. The thermoplastic composition of claim 8 wherein the one or more blending polyamide(s) is selected from Group (II) Polyamides, preferably wherein the one or more blending polyamide(s) is selected from poly(ε-caprolactam) (PA 6) and poly(hexamethylene hexanediamide/) (PA 66).

11. The thermoplastic composition of claim 1 wherein said one or more polyhydric alcohols is selected from the group selected from tripentaerythritol, dipentaerythritol and/or pentaerythritol.

12. The thermoplastic composition of claim 1 wherein the resin composition comprise one or more reinforcement agents selected from the group consisting calcium carbonate, glass fibers with circular and noncircular cross-section, glass flakes, glass beads, carbon fibers, talc, mica, wollastonite, calcined clay, kaolin, diatomite, magnesium sulfate, magnesium silicate, barium sulfate, titanium dioxide, sodium aluminum carbonate, barium ferrite, potassium titanate and mixtures thereof.

13. The thermoplastic composition of claim 1 wherein said polyamide composition comprises less than 25 ppm copper as determined with atomic absorption spectroscopy.

14. Use of the thermoplastic composition of claim 1 for high temperature applications, preferably automotive, electrical and electronics applications.

15. A method for manufacturing an article comprising shaping the thermoplastic composition of claim 1, wherein the article is preferably selected from films, laminates, automotive parts, engine parts, electrical arts and electronics parts and/or the shaping is preferably made by injection moulding or blow moulding.

## Patentansprüche

1. Thermoplastische Zusammensetzung, umfassend
A) ein Polyamidharz, umfassend ein oder mehrere Polyamide, ausgewählt aus der Gruppe, bestehend aus Polyamiden der Gruppe (III), umfassend
(a) zu 20 bis 35 Molprozent semiaromatische Grundeinheiten, die von Monomeren abgeleitet sind, die ausgewählt sind aus einem oder mehreren aus der Gruppe, bestehend aus:
i) aromatischen Dicarbonsäuren mit 8 bis 20 Kohlenstoffatomen und aliphatischen Diaminen mit 4 bis 20 Kohlenstoffatomen; und
(b) zu 65 bis 80 Molprozent aliphatische Grundeinheiten, die von Monomeren abgeleitet sind, die ausgewählt sind aus einem oder mehreren aus der Gruppe, bestehend aus:
ii) einer aliphatischen Dicarbonsäure mit 6 bis 20 Kohlenstoffatomen, wobei das aliphatische Diamin 4 bis 20 Kohlenstoffatome aufweist;
iii) einem Lactam und/oder Aminocarbonsäure mit 4 bis 20 Kohlenstoffatomen;
B) zu 0,25 bis 15 Gewichtsprozent ein oder mehrere Polyole, die mehr als zwei Hydroxylgruppen enthalten und ein Molekulargewicht-Zahlenmittel (Mn) von weniger als 2000 aufweisen, wie mit Gelchromatographie bestimmt, wobei der Gewichtsprozentsatz auf dem Gesamtgewicht der thermoplastischen Zusammensetzung beruht; und
C) zu 0 bis 60 Gewichtsprozent ein oder mehrere Verstärkungsmittel,
wobei das Polyamidharz mindestens 60 mäq/kg Aminenden aufweist,
wobei die Aminenden durch Titrieren einer 2-prozentigen Lösung von Polyamid in einer Phenol/Methanol/Wasser-Mischung (50:25:25, bezogen auf das Volumen) mit 0,1N-Salzsäure bestimmt werden.

2. Thermoplastische Zusammensetzung gemäß Anspruch 1, wobei das Polyamidharz mindestens 70 mäq/kg Aminenden aufweist.

3. Thermoplastische Zusammensetzung gemäß Anspruch 1, wobei das Polyamidharz ein oder mehrere Polyamide umfasst, die einen Schmelzpunkt von mindestens 210 °C aufweisen und ausgewählt sind aus der Gruppe, bestehend aus Poly(tetramethylenhexandiamid/tetramethylenterephthalamid) (PA46/4T), Poly(tetramethylenhexandiamid/hexamethylenterephthalamid) (PA46/6T), Poly(tetramethylenhexandiamid/2-methylpentamethylen
hexandiamid/decamethylenterephthalamid) PA46/D6/10T), Poly(hexamethylenhexandiamid/hexamethylenterephthalamid) (PA66/6T), Poly(hexamethylenhexandiamid/hexamethylenisophthalamid/hexamethylenterephthalami d) PA66/6I/6T und Poly(hexamethylenhexandiamid/2-methylpentamethylenhexandiamid/hexamethylenterephthalamid) (PA66/D6/6T).

4. Thermoplastische Zusammensetzung gemäß Anspruch 1, wobei das Polyamidharz einen Schmelzpunkt von mindestens 260 °C aufweist, wie mit Differential-Scanning-Kalorimetrie bei 10 °C/min Scannrate bei der ersten Wärmeprüfung bestimmt.

5. Thermoplastische Zusammensetzung gemäß Anspruch 4, wobei die semiaromatische Grundeinheit von Terephthalsäure abgeleitet ist.

6. Thermoplastische Zusammensetzung gemäß Anspruch 5, wobei die aliphatische Grundeinheit von Adipinsäure abgeleitet ist.

7. Thermoplastische Zusammensetzung gemäß Anspruch 5 oder 6, wobei das aliphatische Diamin 1,4-Butandiamin oder 1,6-Hexandiamin ist.

8. Thermoplastische Zusammensetzung gemäß Anspruch 1, ferner umfassend
(D) zu 0,1 bis 30 Gewichtsprozent ein oder mehrere Mischpolyamid(e), die unabhängig voneinander ausgewählt sind aus der Gruppe, bestehend aus Polyamiden der Gruppe (I), die einen Schmelzpunkt von weniger als 210 °C aufweisen und ein aliphatisches oder semiaromatisches Polyamid umfassen, das ausgewählt ist aus der Gruppe, bestehend aus Poly(pentamethylendecandiamid) (PA510), Poly(pentamethylendodecandiamid) (PA512), Poly(ε-caprolactam/hexamethylenhexandiamid) (PA6/66), Poly(ε-caprolactam/hexamethylendecandiamid) (PA6/610), Poly(ε-caprolactam/hexamethylendodecandiamid) (PA6/612), Poly(hexamethylentridecandiamid) (PA613), Poly(hexamethylenpentadecandiamid) (PA615), Poly(ε-caprolactam/tetramethylenterephthalamid) (PA6/4T), Pols(ε-caprolactam/hexamethylenterephthalamid) (PA6/6T), Poly(ε-caprolactam/decamethylenterephthalamid) (PA6/10T), Pols(ε-caprolactam/dodecamethylenterephthalamid) (PA6/12T), Poly(hexamethylendecandiamid/hexamethylenterephthalamid) (PA610/6T), Poly(hexamethylendodecandiamid/hexamethylenterephthalamid) (PA612/6T), Poly(hexamethylentetradecandiamid/hexamethylenterephthalamid) (PA614/6T), Poly(ε-caprolactam/hexamethylenisophthalamid/hexamethylenterephthalamid) (PA6/6I/6T), Poly(ε-caprolactam/hexamethylenhexandiamid/hexamethylendecandiamid) (PA6/66/610), Poly(ε-caprolactam/hexamethylenhexandiamid/hexamethylendodecandiamid) (PA6/66/612), Poly(ε-caprolactam/hexamethylenhexandiamid/hexamethylendecandiamid/hexamethylendodeca ndiamid) (PA6/66/610/612), Poly(2-methylpentamethylenhexandiamid/hexamethylenhexandiamid/hexamethylenterephthamid ) (PA D6/66/ /6T), Poly(2-methylpentamethylen hexandiamid/hexamethylenhexandiamid/) (PA D6/66), Poly(decamethylendecandiamid) (PA1010), Poly(decamethylendodecandiamid) (PA1012), Poly(decamethylendecandiamid/decamethylenterephthalamid) (PA 1010/10T) Poly(decamethylendecandiamid/dodecamethylendecandiamid/ decamethylenterephthalamid/dodecamethylenterephthalamid (PA 1010/1210/10T/12T), Poly(11-aminoundecanamid) (PA 11), Poly(11-aminoundecanamid/tetramethylenterephthalamid) (PA11/4T), Poly(11-aminoundecanamid/hexamethylenterephthalamid) (PA11/ 6T), Poly(11-aminoundecanamid/decamethylenterephthalamid) (PA11/10T), Poly(11-aminoundecanamid/dodecamethylenterephthalamid) (PA11/12T), Poly(12-aminododecanamid) (PA12), Poly(12-aminododecanamid/tetramethylenterephthalamid) (PA12/4T), Poly(12-aminododecanamid/hexamethylenterephthalamid) (PA12/6T), Poly(12-aminododecanamid/decamethylenterephthalamid) (PA 12/10T) Poly(dodecamethylendodecandiamid) (PA1212) und Poly(dodecamethylendodecandiamid/dodecamethylendodecandiamid/dodecamethylentere -phthalamid)) (PA1212/12T); und
Polyamiden der Gruppe (II), die einen Schmelzpunkt von mindestens 210 °C aufweisen und ein aliphatisches Polyamid umfassen, das ausgewählt ist aus der Gruppe, bestehend aus Poly(tetramethylenhexandiamid) (PA46), Poly(ε-caprolactam) (PA 6), Poly(hexamethylenhexandiamid/(ε-caprolactam/) (PA 66/6) Poly(hexamethylenhexandiamid) (PA 66), Poly(hexamethylenhexandiamid/hexamethylendecandiamid) (PA66/610), Poly(hexamethylenhexandiamid/hexamethylendodecandiamid) (PA66/612), Poly (hexamethylenhexandiamid/decamethylendecandiamid) (pa66/1010), Poly(hexamethylendecandiamid) (PA610), Poly(hexamethylendodecandiamid) (PA612), Poly(hexamethylentetradecandiamid) (PA614), Poly(hexamethylenhexadecandiamid) (PA616) und Poly(tetramethylenhexandiamid/2-methylpentamethylenhexandiamid) (PA46/D6).

9. Thermoplastische Zusammensetzung gemäß Anspruch 8, wobei das eine oder die mehreren Mischpolyamid(e) Group (I) Polyamides ausgewählt sind.

10. Thermoplastische Zusammensetzung gemäß Anspruch 8, wobei das eine oder die mehreren Mischpolyamid(e) aus Polyamiden der Gruppe (II) ausgewählt sind, wobei vorzugsweise das eine oder die mehreren Mischpolyamid(e) aus Poly(ε-caprolactam) (PA 6) und Poly(hexamethylenhexandiamid) (PA 66) ausgewählt sind.

11. Thermoplastische Zusammensetzung gemäß Anspruch 1, wobei der eine oder die mehrere Polyole ausgewählt sind aus der Gruppe, ausgewählt aus Tripentaerythrit, Dipentaerythrit und/oder Pentaerythrit.

12. Thermoplastische Zusammensetzung gemäß Anspruch 1, wobei die Harzzusammensetzung ein oder mehrere Verstärkungsmittel umfasst, ausgewählt aus der Gruppe, bestehend aus Calciumcarbonat, Glasfasern mit kreisförmigem und nichtkreisförmigem Querschnitt, Glasflocken, Glaskügelchen, Kohlenstofffasern, Talk, Glimmer, Wollastonit, kalziniertem Ton, Kaolin, Diatomit, Magnesiumsulfat, Magnesiumsilicat, Bariumsulfat, Titandioxid, Natriumaluminiumcarbonat, Bariumferrit, Kaliumtitanat und Mischungen davon.

13. Thermoplastische Zusammensetzung gemäß Anspruch 1, wobei die Polyamidzusammensetzung weniger als 25 ppm Kupfer umfasst, wie mit Atomabsorptionsspektroskopie bestimmt.

14. Verwendung der thermoplastischen Zusammensetzung gemäß Anspruch 1 für Hochtemperaturanwendungen, vorzugsweise Automobil-, Elektrik- und Elektronikanwendungen.

15. Verfahren zum Herstellen eines Artikels, umfassend das Formen der thermoplastischen Zusammensetzung gemäß Anspruch 1, wobei der Artikel vorzugsweise aus Folien, Laminaten, Automobilteilen, Motorteilen, Elektrikteilen und Elektronikteilen ausgewählt ist, und/oder das Formen vorzugsweise durch Spritzgießen oder Blasformen erfolgt.

## Revendications

1. Composition thermoplastique comprenant
A) une résine de polyamide comprenant un ou plusieurs polyamides choisis dans le groupe constitué par les polyamides du Groupe (III) comprenant
(a) 20 à 35 pour cent en moles de motifs répétés semi-aromatiques issus de monomères choisis parmi un ou plusieurs du groupe constitué par:
i) les acides dicarboxyliques aromatiques ayant 8 à 20 atomes de carbone et les diamines aliphatiques ayant 4 à 20 atomes de carbone; et
b) 65 à 80 pour cent en moles de motifs répétés aliphatiques issus de monomères choisis parmi un ou plusieurs du groupe constitué par:
ii) un acide dicarboxylique aliphatique ayant 6 à 20 atomes de carbone et ladite diamine ayant 4 à 20 atomes de carbone;
iii) un lactame et/ou un acide aminocarboxylique ayant 4 à 20 atomes de carbone;
B) 0,25 à 15 pour cent en poids d'un ou plusieurs polyalcools ayant plus que deux groupes hydroxyles et ayant un poids moléculaire moyen en nombre (Mn) inférieur à 2000 tel que déterminé par chromatographie sur gel, le pourcentage en poids étant fondé sur le poids total de ladite composition thermoplastique; et
C) 0 à 60 pour cent en poids d'un ou plusieurs agents de renforcement,
dans laquelle ladite résine de polyamide a au moins 60 mEq/kg d'extrémités amines,
dans laquelle les extrémités amines sont déterminées en titrant une solution à 2 pour cent de polyamide dans un mélange phénol/méthanol/eau (50:25:25 en volume) avec de l'acide chlorhydrique 0,1N.

2. Composition thermoplastique selon la revendication 1, dans laquelle ladite résine de polyamide a au moins 70mEq/kg d'extrémités amines.

3. Composition thermoplastique selon la revendication 1, dans laquelle ladite résine de polyamide comprend un ou plusieurs polyamides ayant un point de fusion d'au moins 210°C et choisis dans le groupe constitué par un poly(tétraméthylène hexanediamide/tétraméthylène téréphtalamide) (PA46/4T), un poly(tétraméthylène hexanediamide/hexaméthylène téréphtalamide) (PA46/6T), un poly(tétraméthylène hexanediamide/2-méthylpentaméthylène hexanediamide/décaméthylène téréphtalamide) (PA46/D6/10T), un poly(hexaméthylène hexanediamide/hexaméthylène téréphtalamide) (PA66/6T), un poly(hexaméthylène hexanediamide/hexaméthylène isophtalamide/hexaméthylène téréphtalamide) PA66/6I/6T et un poly(hexaméthylène hexanediamide/2-méthylpentaméthylène hexanediamide/hexaméthylène téréphtalamide) (PA66/D6/6T).

4. Composition thermoplastique selon la revendication 1, dans laquelle la résine de polyamide a un point de fusion d'au moins 260°C tel que déterminé par calorimétrie différentielle à une vitesse de balayage de 10°C/min. lors du premier balayage chauffant.

5. Composition thermoplastique selon la revendication 4, dans laquelle ledit motif répété semi-aromatique est issu d'acide téréphtalique.

6. Composition thermoplastique selon la revendication 5, dans laquelle ledit motif répété aliphatique est issu d'acide adipique.

7. Composition thermoplastique selon la revendication 5 ou 6, dans laquelle ladite diamine aliphatique est la 1,4-butane diamine ou la 1,6-hexanediamine.

8. Composition thermoplastique selon la revendication 1, comprenant en outre
(D) 0,1 à 30 pour cent en poids d'un ou plusieurs polyamide(s) de mélange indépendamment choisi(s) dans le groupe constitué par les polyamides du Groupe (I) ayant un point de fusion inférieur à 210°C, et comprenant un polyamide aliphatique ou semi-aromatique choisi dans le groupe constitué par un poly(pentaméthylène décanediamide) (PA510), un poly(pentaméthylène dodécanediamide) (PA512), un poly(ε-caprolactame/hexaméthylène hexanediamide) (PA6/66), un poly(ε-caprolactame/hexaméthylène décanediamide) (PA6/610), un poly(ε-caprolactame/hexaméthylène dodécanediamide) (PA6/612), un poly(hexaméthylène tridécanediamide) (PA613), un poly(hexaméthylène pentadécanediamide) (PA615), un poly(ε-caprolactame/tétraméthylène téréphtalamide) (PA6/4T), un poly(ε-caprolactame/hexaméthylène téréphtalamide) (PA6/6T), un poly(ε-caprolactame/décaméthylène téréphtalamide) (PA6/10T), un polo(ε-caprolactame/dodécaméthylène téréphtalamide) (PA6/12T), un poly(hexaméthylène décanediamide/hexaméthylène téréphtalamide) (PA610/6T), un poly(hexaméthylène dodécanediamide/hexaméthylène téréphtalamide) (PA612/6T), un poly(hexaméthylène tétradécanediamide/hexaméthylène téréphtalamide) (PA614/6T), un poly(ε-caprolactame/hexaméthylène isophtalamide/hexaméthylène téréphtalamide) (PA6/6I/6T), un poly(ε-caprolactame/hexaméthylène hexanediamide/hexaméthylène décanediamide) (PA6/66/610), un poly(ε-caprolactame/hexaméthylène hexanediamide/hexaméthylène dodécanediamide) (PA6/66/612), un poly(ε-caprolactame/hexaméthylène hexanediamide/hexaméthylène décanediamide/hexaméthylène dodécanediamide) (PA6/66/610/612), un poly(2-méthylpentaméthylène hexanediamide/hexaméthylène hexanediamide/hexaméthylène téréphtamide) (PA D6/66/ /6T), un poly(2-méthylpentaméthylène hexanediamide/hexaméthylène hexanediamide/) (PA D6/66), un poly(décaméthylène décanediamide) (PA1010), un poly(décaméthylène dodécanediamide) (PA1012), un poly(décaméthylène décanediamide/décaméthylène téréphtalamide) (PA1010/10T), un poly(décaméthylène décanediamide/dodécaméthylène décanediamide/décaméthylène téréphtalamide/dodécaméthylène téréphtalamide) (PA1010/1210/10T/12T), un poly(11-aminoundécanamide) (PA11), un poly(11-aminoundécanamide/tétraméthylène téréphtalamide) (PA11/4T), un poly(11-aminoundécanamide/hexaméthylène téréphtalamide) (PA11/6T), un polo(11-aminoundécanamide/décaméthylène téréphtalamide) (PA11/10T), un poly(11-aminoundécanamide/dodécaméthylène téréphtalamide) (PA11/12T), un poly(12-aminododécanamide) (PA12), un poly(12-aminododécanamide/tétraméthylène téréphtalamide) (PA12/4T), un poly(12-aminododécanamide/hexaméthylène téréphtalamide) (PA12/6T), un poly(12-aminododécanamide/décaméthylène téréphtalamide) (PA12/10T), un poly(dodécaméthylène dodécanediamide) (PA1212) et un poly(dodécaméthylène dodécanediamine/dodécaméthylène dodécanediamide/dodécaméthylène téréphtalamide) (PA1212/12T); et
les polyamides du Groupe (II) ayant un point de fusion d'au moins 210°C, et comprenant un polyamide aliphatique choisi dans le groupe constitué par un poly(tétraméthylène hexanediamide) (PA46), un poly(ε-caprolactame) (PA 6), un poly(hexaméthylène hexanediamide/(ε-caprolactame) (PA 66/6), un poly(hexaméthylène hexanediamide) (PA 66), un poly(hexaméthylène hexanediamide/hexaméthylène décanediamide) (PA66/610), un poly(hexaméthylène hexanediamide/hexaméthylène dodécanediamide) (PA66/612), un poly(hexaméthylène hexanediamide/décaméthylène décanediamide) (PA66/1010), un poly(hexaméthylène décanediamide) (PA610), un poly(hexaméthylène dodécanediamide) (PA612), un poly(hexaméthylène tétradécanediamide) (PA614), un poly(hexaméthylène hexadécanediamide) (PA616) et un poly(tétraméthylène hexanediamide/2-méthylpentaméthylène hexanediamide) (PA46/D6).

9. Composition thermoplastique selon la revendication 8, dans laquelle le ou les polyamide(s) de mélange est (sont) choisi(s) parmi les polyamides du Groupe (I).

10. Composition thermoplastique selon la revendication 8, dans laquelle le ou les polyamide(s) de mélange est (sont) choisi(s) parmi les polyamides du Groupe (II), de préférence dans laquelle le ou les polyamide(s) de mélange est (sont) choisi(s) parmi un poly(ε-caprolactame) (PA 6) et un poly(hexaméthylène hexanediamide/) (PA 66).

11. Composition thermoplastique selon la revendication 1, dans laquelle ledit ou lesdits polyalcool(s) est (sont) choisi(s) dans le groupe choisi parmi le tripentaérythritol, le dipentaérythritol et/ou le pentaérythritol.

12. Composition thermoplastique selon la revendication 1, dans laquelle la composition de résine comprend un ou plusieurs agents de renforcement choisis dans le groupe constitué par un carbonate de calcium, les fibres de verre ayant une coupe transversale circulaire et non circulaire, les écailles de verre, les billes de verre, les fibres de carbone, un talc, un mica, une wollastonite, une argile calcinée, un kaolin, une diatomite, un sulfate de magnésium, un silicate de magnésium, un sulfate de baryum, un dioxyde de titane, un carbonate de sodium et d'aluminium, une ferrite de baryum, un titanate de potassium et des mélanges de ceux-ci.

13. Composition thermoplastique selon la revendication 1, dans laquelle ladite composition de polyamide comprend moins que 25ppm de cuivre comme déterminé par spectroscopie atomique d'absorption.

14. Utilisation de la composition thermoplastique selon la revendication 1 pour des applications à haute température, de préférence des applications automobiles, électriques et électroniques.

15. Procédé de fabrication d'un article, comprenant le façonnage de la composition thermoplastique selon la revendication 1, dans lequel l'article est de préférence choisi parmi les pellicules, les stratifiés, les pièces automobiles, les pièces de moteur, les pièces électriques et les pièces électroniques et/ou le façonnage est de préférence effectué par moulage par injection ou moulage par soufflage.
